(19) Europäisches Patentamt
European Patent Office
Office européen des brevets

(11) Veröffentlichungsnummer: **0 207 290**
**A2**

(12) **EUROPÄISCHE PATENTANMELDUNG**

(21) Anmeldenummer: 86107233.8

(22) Anmeldetag: 28.05.86

(51) Int. Cl.⁴: **C12F 3/08**

(30) Priorität: 04.07.85 DE 3523946

(43) Veröffentlichungstag der Anmeldung:
07.01.87 Patentblatt 87/02

(84) Benannte Vertragsstaaten:
AT BE CH DE FR GB IT LI LU NL SE

(71) Anmelder: **Hoesch Aktiengesellschaft**
**Eberhardstrasse 12**
**D-4600 Dortmund 1(DE)**

(72) Erfinder: **Henning, Martin, Dipl.-Ing.**
**Karl-Mostert-Strasse 3**
**D-4700 Hamm 1(DE)**
Erfinder: **Spitzer, Rainer, Dipl.-Ing.**
**Pfarrer-Nigge-Strasse 15**
**D-4670 Lünen 1(DE)**

(54) **Verfahren zur Gewinnung einer Alkohol/Wassermischung aus einem viele Feststoffe enthaltenden Ausgangsmaterial von geringem Alkoholgehalt.**

(57) Es werden ein Verfahren und eine Vorrichtung beschrieben, mit denen aus einem viele Feststoffe enthaltenden Ausgangsmaterial wie z. B. Apfeltrestermaische eine Alkohol/Wassermischung von hoher Konzentration erzeugt wird. Das Ausgangsmaterial wird durch den Zusatz von Wasserdampf auf 140 °C bis 150 °C erwärmt, wodurch sich ein Druck von 7 bis 8 bar aufbaut.

Achließend wird das Ausgangsmaterial in einem Expansionsbehälter, in dem ein niedriger Druck herrscht, plötzlich verdampft.

FIG. 1

Verfahren zur Gewinnung einer Alkohol/Wassermischung aus einem viele Feststoffe enthaltenden Ausgangsmaterial von geringem Alkoholgehalt.

Die Erfindung betrifft ein Verfahren und eine Vorrichtung zur Gewinnung einer höher konzentrierten reinen Alkohol/Wassermischung aus einem viele Feststoffe enthaltendem Ausgangsmaterial mit niedriger Alkoholkonzentration.

Ein Ausgangsmaterial, das nach dem Stand der Technik nur mit erheblichem apparativem Aufwand weiterverarbeitet werden kann, liegt dann vor, wenn Abfälle oder Rückstände zwecks Alkoholgewinnung vergoren werden. Solche Abfälle fallen z B. als Preßrückstände bei der Obstsaftherstellung oder der Zuckerherstellung an.

Es ist bekannt, diese Preßrückstände mit Wasser zu versetzen, zu vergären, anschließend den Trester unter ständigem Umrühren vorsichtig zu erhitzen, um aus den entweichenden Dämpfen durch bekannte Destillationsverfahren den Alkohol zu gewinnen. Das Erhitzen des Tresters macht erhebliche Schwierigkeiten, da dieser sehr viele Stoffe enthält, die sich leicht an den Kesselwänden festsetzen.

Wegen der Gefahr des Festsetzens oder Festbrennens darf nur ein relativ geringer Wärmeübergang von den Kesselwänden zum Trester stattfinden, so daß der Kessel sehr groß sein muß, um eine ausreichende Verdampfungsleistung zu erhalten.

Ein weiterer Nachteil der bekannten Verfahren besteht darin, daß zum Zwecke einer hohen Alkoholausbeute aus dem Trester, dessen Anteil an Flüssigkeit fast vollständig verdampft werden müßte, wodurch große Wärmemengen für die Verdampfung verbraucht werden. Da die Bedingungen für das Rühren und für den Wärmeübergang bei hohem Verdampfungsgrad zu schlecht werden, begnügen sich die bekannten Verfahren mit einer Teilverdampfung und einem relativ hohen verlorenen Anteil an Alkohol im nicht verdampften flüssigen Rest des Tresters.

Der Erfindung liegt die Aufgabe zugrunde, die beschriebenen Nachteile zu vermeiden und ein Verfahren und eine Vorrichtung zu schaffen, bei denen mit geringem apparativen Aufwand äußerst betriebssicher und mit relativ wenig Energieaufwand ein hoher Anteil an Alkohol aus einem beliebigen wäßrigen Ausgangsmaterial erhalten wird.

Diese Aufgabe wird entsprechend dem kennzeichnenden Teil des Anspruches 1 gelöst. Weiterbildungen der Erfindung sind in den Unteransprüchen 2 und 3 enthalten. Im Anspruch 3 ist eine Vorrichtung zur Durchführung des Verfahrens beschrieben, deren Weiterbildungen in den Ansprüchen 4 bis 10 enthalten ist.

Das Verfahren und die Vorrichtung werden an einem Ausführungsbeispiel anhand der Figuren näher erläutert.

Das vergorene Ausgangsmaterial fließt infolge eines Höhenunterschiedes vom Fermentationslager 11 zur Pumpe 12 und wird von dieser in die Leitung 13 gedrückt, die unter einem Druck von ca. 4 bis 5 bar steht. In die Leitung 13 ist kurz vor ihrer Mündung in den Expansionsbehälter 14 ein Druckregelventil 15 eingebaut, das in dem Teil der Leitung 13 der zwischen der Pumpe 12 und dem Druckregelventil 15 liegt, einen annähernd konstanten Druck von 4 bis 5 bar aufbaut.

In die Leitung 13 sind zwischen der Pumpe 12 und dem Druckregelventil 15 zwei Injektionsdüsen 16 und 17 eingebaut.

Mit Hilfe dieser Düsen wird mittels Wasserdampf von 7 bis 8 bar in 2 Stufen das Rohprodukt mit einer Temperatur von 20 °C bis °C auf ca. 140 °C bis 150 °C erhitzt. Der Wasserdampf fließt durch die Leitung 20 zu den Injektionsdüsen 16 und 17. In der Injektionsdüse 16 erwärmt sich das Rohprodukt auf ca. 90 °C bis 100 °C. Hier ist die Anordnung des Dampfeintrittes in das Rohprodukt durch eine oder wenige große Düsen ausreichend, da es sich um eine Vorwärmestufe handelt. Es reicht z. B. eine Düse aus, deren Öffnung konzentrisch zur Längsachse der Injektionsdüse 16 mündet. Die Injektionsdüsen 16 und 17 sind ca. 5 m voneinander entfernt, damit eine Kondensation des Wasserdampfes und damit die Vorwärmung des Rohproduktes, gewährleistet ist.

In der Injektionsdüse 17 wird das vorgewärmte Rohprodukt von ca. 100 °C auf ca. 140 °C bis 150 °C durch den Wasserdampf von ca. 7 bis 8 bar aufgeheizt.

Die Injektionsdüse 17 besteht aus einem kleinen Behälter, der einen gelochten Teil der Leitung 13 umgibt. Der gelochte Teil der Leitung 13 enthält eine Vielzahl von Bohrungen, welche auf dem Umfang dieser Leitung verteilt sind. Diese Bohrungen sind unter verschiedenen Winkeln in die Leitung 13 gebohrt, damit der Dampf das Produkt verwirbelt und in kürzester Zeit kondensiert und dadurch das Rohprodukt aufgeheizt wird.

Zwischen der Injektionsdüse 17 und dem Druckregelventil 15 befindet sich eine Mischstrecke von 2 m.

Hinter dem Druckregelventil 15 kommt es im Expansionsbehälter 14 infolge eines starken Druckabfalles zu einer starken Expansionsverdampfung des Ausgangsmaterials. Im Expansionsbehälter 14 herrscht ein Druck von 0,6 bar und eine Temperatur von 85° C.

Bei dem Ausführungsbeispiel beträgt die in die Leitung 13 gepumpte Fördermenge 66 1/min. Die Leitung 13 hat einen lichten Durchmesser von 80 mm.

2

Im Expansionsbehälter 14 fließen vom oberen Teil durch das Rohr 18 Dämpfe ab, die zu 22 bis 25 Gew-% aus Alkohol und zu 75 bis 78 Gew-% aus Wasserdampf bestehen.

Im unteren Teil des Expansionsbehälters 14 fließt durch das Rohr 19 die Schlempe ab, welche als Beimengungen alle festen und schwer flüchtigen Stoffe enthält, die auch im Ausgangsmaterial enthalten waren.

Aus den Dämpfen der Leitung 18 kann in bekannter Weise durch Destillation/Rektifikation ein Alkohol von hoher Konzentration gewonnen werden.

Durch das Rohr 19 fließen 60 % der Wassermengen ab, bezogen auf die gesamte Wassermenge, die im Ausgangsmaterial enthalten ist und durch die Pumpe 12 in die Leitung 13 gefördert wird. In der durch das Rohr 19 abfließenden Schlempe sind überraschenderweise nur 10 % der Alkoholmenge des Ausgangsmaterials enthalten, so daß die Anlage z. B. beim Betrieb mit Apfeltrestermaische, die ca. 3 –4 Vol % Alkohol enthält, eine Alkoholausbeute von 90 % erbringt. Bei konventioneller Technik sind unter den gleichen Bedingungen und mit der gleichen Abdampfrate nur 65 % Alkoholausbeute möglich.

Das Verfahren und die Vorrichtung eignen sich nicht nur für die Alkoholgewinnung aus vergärbaren Abfällen oder Rückständen, sie sind auch zum Alkoholentzug von Flüssigkeiten wie z. B. Weinen einsetzbar.

Die im Beispiel angegebenen Betriebsbedingungen in bezug auf Druck und Temperatur sind in gewissen Grenzen veränderbar. Es kann z. B. auch der Druck im Expansionsbehälter 14 1 bar betragen, wenn der Druck und die Temperatur in der Leitung 13 etwas erhöht werden. Umgekehrt sind die Expansionsverdampfungen in gleichen Maße auch möglich, wenn der Druck in der Leitung 13 nur 2 bar und die Temperatur nur 120°C betragen und dafür der Druck im Expansionsbehälter auf 0,2 bar erniedrigt wird.

Die vorstehend beschriebene Erfindung läßt sich auch zum Gewinnen von alkoholarmen Getränken benutzen, wenn anstelle des Feststoffe enthaltenden Ausgangsmaterials z. B. ein Wein, vergorener Obstsaft order Bier mit relativ hohem Alkoholgehalt genommen wird. Das alkoholarme Getränk entsteht dann anstelle der Schlempe im unteren Teil des Exppansionsbehälters 14.

Wegen des extrem schnell ablaufenden Verfahrens werden die Getränke nur für den Bruchteil einer Sekunde erhitzt undim Expansionbehälter sofort weider abgekühlt, was den Vorteil hat, daß die Geschmachsstoff weitgehend erhalten bleiben, weil sie keine ausreichende Zeit zum Zerfallen haben.

Die Schlempe ist deshalb wohlschmeckend und kann als wertvolles Veihfutter benutzt werden, während die bei herkömmlichen Verfahren anfallende Schlempe nicht einmal als Dünger benutzt werden kann, weil sie zu sauer ist. Sie stellt deshalb ein Umweltproblem dar.

Die vorstehend beschriebene Erfindung kann auch bei alkoholfreiem Ausgangsmaterial nur dazu benutzt werden, um eine wohlschmeckende "Schlempe" zu gewinnen.

Bei alkoholfreiem Augangsmaterial, das z. b. aus verkleinertem Obst bestehen kann, würden dann im Expansionsbehälter 14 im oberen Teil nur reiner Wasserdampf abziehen während die "Schlempe" im unteren Teil des Expansionsbehälters eine wohlschmeckende Marmelade ergibt.

11 Fermentationslager
12 Pumpe
13 Leitung
14 Expansionsbehälter
15 Durckregelventil
16 Injektionsdüse 1
17 Injektionsdüse 2
18 Rohr (oberes)
19 Rohr (unteres)

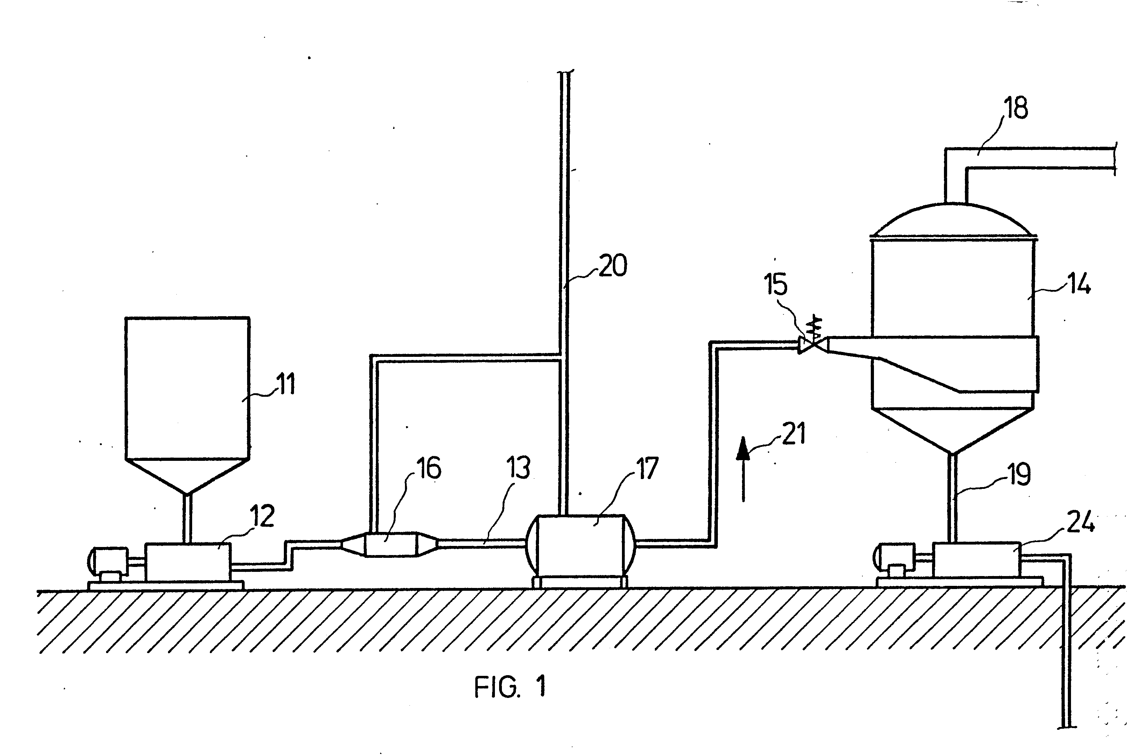

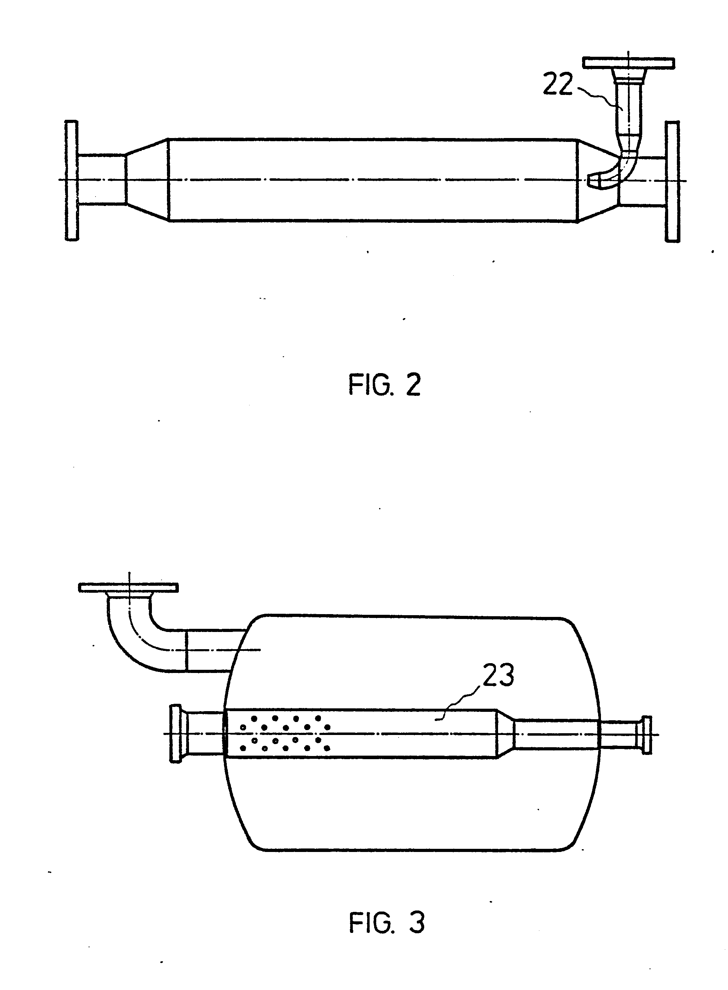

## Ansprüche

1. Verfahren zur Gewinnung einer Alkohol/Wassermischung aus einem Feststoffe enthaltenden Ausgangsmaterial mit niedrigerer Alkoholkonzentration als die gewonnene Mischung durch teilweises Verdampfen des Ausgangsmaterials und anschließender Kondensation der Dämpfe, dadurch gekennzeichnet, daß in durch eine Rohrleitung fließendes Ausgangsmaterial, zum Zwecke der Erwärmung, Wasserdampf eingeblasen wird und anschließend das Ausgangsmaterial über eine Drossel oder ein Druckhalteventil in einen Abscheidebehälter gepumpt wird, dessen Temperatur 40 °C bis 70 °C unterhalb der Temperatur des Ausgangsmaterials, die dieses vor der Drossel hat, liegt und anschließend die Alkohol-/Wasserdämpfe aus dem Abscheidebehälter zu einem Kondensator oder einer Destillations-/Rektifikationseinheit geleitet werden und die die Feststoffe enthaltende Flüssigkeit aus dem unteren Teil des Abscheidebehälters abgeleitet wird.

2. Verfahren nach Anspruch 1, dadurch gekennzeichnet, daß der Wasserdampf in mindestens zwei Stufen in das Ausgangsmaterial geblasen wird und das Ausgangsmaterial den zwischen den beiden Stufen liegenden Weg in einer Zeit von mindestens 3 sec zurücklegt.

3. Vorrichtung zur Gewinnung einer Alkohol/Wassermischung zur Durchführung des Verfahrens nach den Ansprüchen 1 und 2, dadurch gekennzeichnet, daß diese aus einer mit dem Gärbottich oder einem Vorratsbehälter verbundenen Pumpe besteht, deren Förderleitung über eine oder mehrere Erwärmungseinheiten zu einem Drosselorgan wie z. b. Drossel oder Durckhalteventil führt und das Drosselorgang mit einem Expansions-und Abscheidebehälter verbunden ist und die Erwärmungseinheit aus einer oder einer Gruppe von in die Förderleitung mündenden Injektionsdüsen besteht, die mit einer Dampfzuführungsleitung verbunden ist bzw. sind.

4. Vorrichtung nach Anspruch 3, dadurch gekennzeichnet, daß zwei oder mehr Erwärmungseinheiten in die Förderleitung eingebaut sind, zwischen denen jeweils eine Beruhigungsstrecke liegt.

5. Vorrichtung nach den Ansprüchen 3 und 4, dadurch gekenn-zeichnet, daß die inFörderrichtung des Ausgangsmaterials letzte liegende Erwärmungseinheit eine sehr große Anzahl von kleinen Injektionsdüsen enthält und die in Förderrichtung zuerst liegende Erwärmungseinheit aus 1 bis 20 Injektionsdüsen besteht, deren Durchmesser mindestens 10mal so groß ist, als der Durchmesser der Düsen der letzten Erwärmungseinheit beträgt.

6. Vorrichtung nach Anspruch 5, dadurch gekennzeichnet, daß die erste Erwärmungseinheit aus einer einzelnen Injektionsdüse besteht, die konzentrisch zur Achse der Förderleitung liegt und in Förderrichtung mündet.

7. Vorrichtung nach den Ansprüchen 3 bis 6, dadurch gekennzeichnet, daß das Drosselorgan für eine Drosselung von 3 bis 6 bar auf 0,3 bis 1 bar ausgelegt ist.

8. Vorrichtung nach den Ansprüchen 3 bis 7, dadurch gekennzeichnet, daß die Dampfzuführungsleitung zu den Injektionsdüsen Dampf mit einem zwischen 5 bis 8 bar liegenden Druck enthält.

9. Vorrichtung nach den Ansprüchen 3 bis 7, dadurch gekennzeichnet, daß der Druck in der Dampfzuführungsleitung der Injektionsdüsen um 2 bis 4 bar höher liegt, als der Druck des Ausgangsmaterials in der Förderleitung.

10. Vorrichtung nach den Ansprüchen 3 bis 9, dadurch gekennzeichnet, daß das Ausgangsmaterial im Bereich der Injektionsdüsen mit einer Geschwindigkeit durch die Förderleitung gefördert wird, die zwischen 1 bis 3 m pro sec. liegt.

FIG. 1

0 207 290

FIG. 2

FIG. 3